# EUROPEAN PATENT APPLICATION

(11) **EP 1 380 505 A1**
(43) Date of publication of application: **14.01.2004**
(21) Application number: 03015772.1
(22) Date of filing: 10.07.2003
(51) Int. Cl.: B65B 9/08, B65B 51/30, B31B 19/74

(54) **bag-making machine**

(30) Priority: 11.07.2002 JP 2002203053
(71) Applicant: Toyo Jidoki Co., Ltd., Tokyo (JP)
(72) Inventor: Hiramoto, Shinichi, Iwakuni-shi, Yamaguchi (JP)
(74) Representative: Schubert, Siegmar, Dipl.-Ing.

(57) **Abstract**

A bag-making apparatus (2) of a bag-making and packaging machine, the bag-making apparatus (2) being changeable in its bag-making speed and including a sealing device that performs sealing on a film that is to be formed into bags. The sealing device is made of a pair of hot plates (13) and a driving mechanism that causes the hot plates (13) to contact and separate from each other at an operating speed that is linked to the bag-making speed via a transmission mechanism (41), and the hot plates (13) are caused to contact with and separate from each other with a stroke that is adjusted by the transmission mechanism (41), and a contact time of the hot plates (13) is maintained at a constant value by way of adjusting the stroke when the operating speed of the driving mechanism is changed.

## Description

### BACKGROUND OF THE INVENTION

### 1. Field of the Invention

The present invention relates to a bag-making apparatus and more particularly to a bag-making apparatus used in a bag-making and packaging machine.

### 2. Prior Art

Japanese Patent Application Laid-Open (Kokai) No. 2002-36392, for example, discloses a bag-making and packaging machine that is comprised of a bag-making apparatus and a bag conveying apparatus.

The bag-making apparatus manufactures bags by unrolling a film that is rolled up in the form of a roll and performs bag-making operations such as sealing and cutting, etc., while feeding this film in the direction of length of the film, and the bag conveying apparatus receives the bags that are successively fed out from the bag-making apparatus and transfers these bags to a following packaging apparatus. The packing apparatus performs, while causing the bags received from the bag conveying apparatus to move, filling of the bags with contents and sealing of the bag mouths, etc.

In this bag-making and packaging machine, the bag-making apparatus and the packaging apparatus are directly connected via the bag conveying apparatus.

Accordingly, in cases where, for example, the packaging apparatus is temporarily stopped (so called occasional stopping) as a result of some type of trouble in the packaging apparatus or because of a slowing in the metering of the contents (slowing of the supply from the metering machine), etc., it is necessary to stop the bag-making apparatus. In the case of minor trouble, the bag-making apparatus can be stopped with the hot plates of the sealing apparatus in an open position, so that the heating of the above-described hot plates is continued (thus allowing immediate restarting of the bag-making apparatus once the trouble with the packaging apparatus has been resolved). In such cases, however, heat is accumulated in the film as a result of the radiation of heat from the hot plates, so that the film is melted or softened, and the film is therefore elongated in the direction of length when the bag-making apparatus is restarted, thus causing a deviation in the cutting position, etc. This positional deviation is detected by using detection means to detect marks printed on the film and is eliminated eventually by controlling the amount of feed of the film on the basis of the resulting signal; meanwhile, however, approximately 20 bags are discarded as defective bags. Such temporary stopping occurs at a rate of approximately once an hour; as a result, the number of bags lost in one day reaches a considerable number.

Japanese Patent Application Laid-Open (Kokai) No. 2001-48342 discloses a bag-making and packaging machine that includes a bag-making apparatus which manufactures bags equipped with spouts, an accumulation and feed-out mechanism which receives the bags equipped with spouts that are successively fed out from the bag-making apparatus and transfers these bags to a following packaging apparatus, and a filling apparatus which fills the bags equipped with spouts that are received from the accumulation and feed-out mechanism with contents. The accumulation and fee-out mechanism has a conveying guide groove that feeds the bags equipped with spouts directly into the filling apparatus, and a bypass guide groove that accumulates bags equipped with spouts. Under ordinary conditions, the bags equipped with spouts are fed into the filling apparatus via the conveying guide groove; and in cases where the filling apparatus is stopped because of some type of trouble, the bags equipped with spouts are fed into the bypass guide groove, so that the operation of the bag-making apparatus can be continued. Furthermore, in this bag-making apparatus for bags equipped with spouts as well, there is a sealing process of spouts and bags; and there is a danger that defective bags will be generated as a result of temporary stopping.

In this bag-making and packaging machine, if the number of bags equipped with spouts that are accumulated increases, the structure of the accumulation and feed-out mechanism becomes larger and more complicated. Furthermore, since all of the bags equipped with spouts are accumulated in a single bypass guide groove, the conveying distance of the bags equipped with spouts tends to be extremely long. Thus, there is some concern that trouble may occur.

Furthermore, Japanese Patent Application Laid-Open (Kokai) No. 2002-4112 discloses a plastic bag process control system in which various types of plastic bags are manufactured in a manufacturing station. A plurality of bag-making machines are disposed, a plurality of plastic bags are held by holders, and these plastic bags are fed by a feeding conveyor to a product filling station in which a plurality of filling machines are disposed.
This process control system has a plastic bag buffer station between the manufacturing station and the product filling station, and the holders holding the plastic bags are accumulated here. However, this process control system is large and complicated. In addition, this prior art does not disclose a method to handle a situation in which any of the filling machines are stopped in the product filling station.

### SUMMARY OF THE INVENTION

The present invention relates to a bag-making and packaging machine that includes a bag-making apparatus and a packaging apparatus that is disposed on the downstream side of this bag-making apparatus, in which the bag-making apparatus manufactures bags by unrolling a film that is rolled up in the form of a roll and performs bag-making operations such as sealing and cutting, etc. while feeding the film in the direction of length of the film; and the object of the present invention is to provide a bag-making apparatus used in such a bag-making and packaging machine in which the bag-making apparatus has a sealing means that performs sealing on the film and includes a pair of hot plates and a driving mechanism that actuates the hot plates.

More specifically, the above-described first object is accomplished by a unique structure of the present invention for a bag-making and packaging machine equipped with a stocker apparatus, and the bag-making apparatus of this bag-making and packaging machine is designed so that the bag-making speed is changeable and a sealing means that performs sealing on the above-described film is provided. This sealing means comprises a pair of hot plates and a driving mechanism that causes the hot plates to contact and separate from each other (in relative terms) at an operating speed that is linked to the bag-making speed via a transmission mechanism; and the hot plates contact and separate from each other (in relative terms) with a stroke that is adjusted by the transmission mechanism, and the contact time of the hot plates is maintained at a constant value by adjusting the stroke when the operating speed of the driving mechanism is changed. More concretely, a spring mechanism is interposed between the transmission mechanism and the hot plates, and this spring mechanism is designed so that it absorbs the movement of the transmission mechanism during a period in which the hot plates separate from each other following contact with each other, and it also pushes the hot plates with a predetermined force during such period. Defective sealing can be prevented by way of maintaining the contact time at a constant value.

Furthermore, the above-described bag-making apparatus that has a sealing means and a driving mechanism actuates the sealing means can be provided with a heat insulating device that is disposed near the sealing means and comprises: a pair of heat insulating plates which have a gap that allows accommodation of the film between the heat insulating plates, and a driving means which causes the heat insulating plates to advance and retract between an advanced position which is between the hot plates and a retracted position that is separated from the advanced position. Needless to say, when the heat-insulating plates advance, the bag-making apparatus is stopped, and the hot plates are stopped in an open position.

In cases where the stopping time of the packaging apparatus is prolonged, so that bags manufactured by the bag-making apparatus are no longer stocked in the stocker apparatus, it becomes necessary to stop the bag-making apparatus. However, the heat from the hot plates that is applied to the film is blocked by the heat-insulating plates, so that melting or softening of the film is suppressed, and the generation of defective bags is also suppressed. Furthermore, the bag-making apparatus is immediately restarted when it becomes possible to restart the packaging apparatus.

### BRIEF DESCRIPTION OF THE DRAWINGS

Figure 1 is a perspective view of the overall construction of the bag-making and packaging machine according to the present invention;
Figure 2 is a partial enlarged view thereof;
Figure 3 is a schematic side view of the sealing means used in the present invention;
Figure 4 illustrates the operation thereof;
Figure 5 illustrates the operation thereof;
Figure 6 illustrates the operation thereof;
Figure 7 illustrates the operation thereof;
Figure 8 illustrates the operation thereof;
Figure 9A is a side view of the hot plates used for sealing, and Figure 9B is a view taken along the line 9B-9B;
Figure 10 is a side view showing the state during the operation of the heating insulating apparatus used in the present invention;
Figure 11 is a perspective view of the overall construction of another bag-making and packaging machine according to the present invention;
Figure 12 is a perspective of the overall construction of still another bag-making and packaging machine according to the present invention;
Figure 13 is a diagram that illustrates the operation of the stocker apparatus;
Figure 14 is a perspective view of the overall construction of still another bag-making and packaging machine according to the present invention;
Figure 15 is a top view showing the overall construction of still another bag-making and packaging machine according to the present invention; and
Figure 16 is a top view showing the overall construction of still another bag-making and packaging machine according to the present invention.

### DETAILED DESCRIPTION OF THE INVENTION

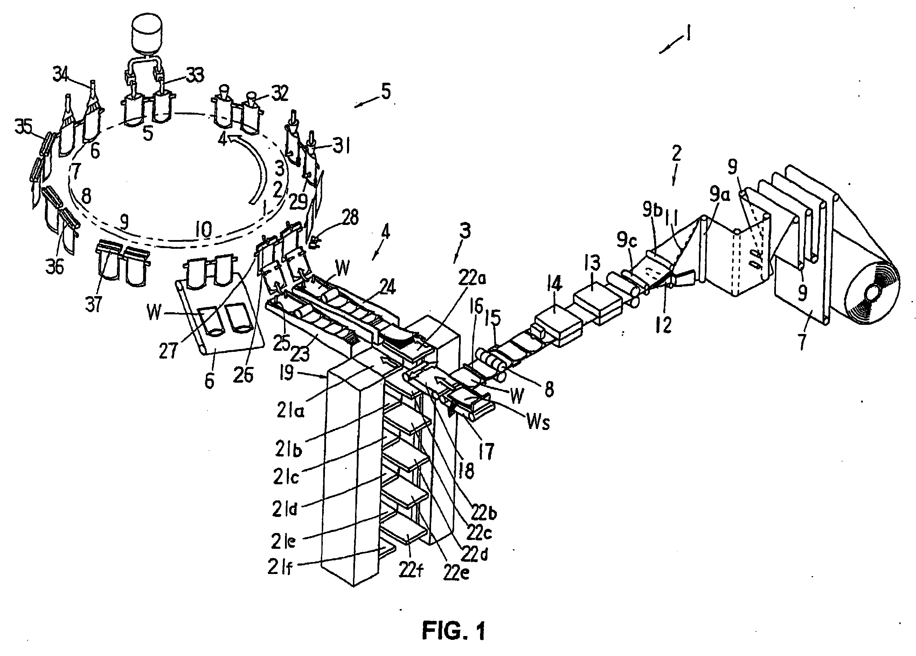

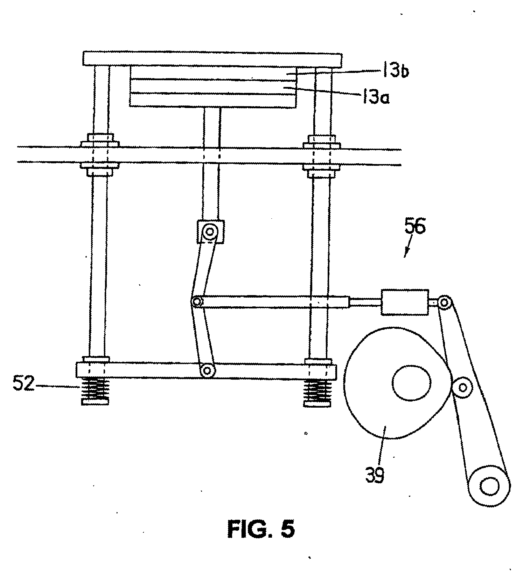

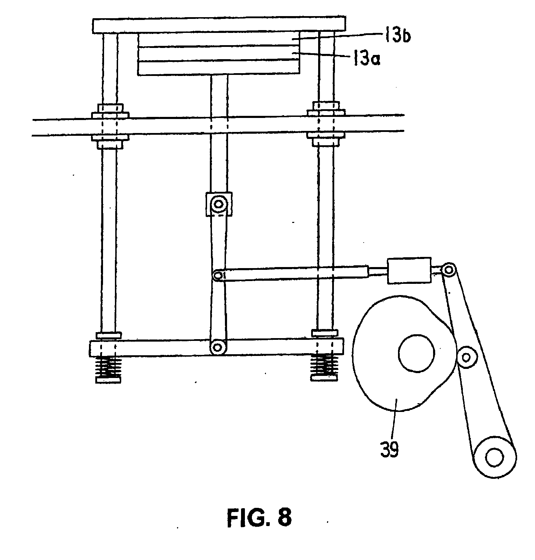

The bag-making and packaging machine of the present invention will be described in detail below with reference to Figures 1 through 16.

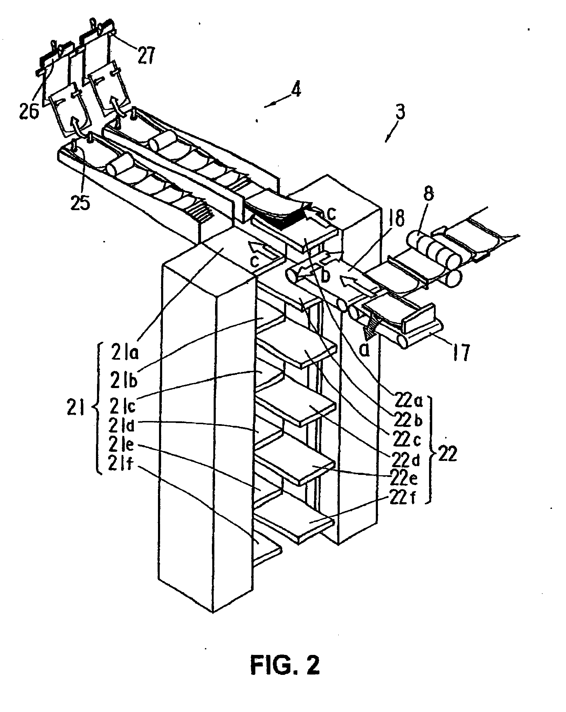

The bag-making and packaging machine 1 shown in Figures 1 and 2 comprises a bag-making apparatus 2, a stocker apparatus 3, a bag-supplying apparatus 4, a two-unit packaging apparatus 5 and a discharge conveyor 6.

The bag-making apparatus 2 unrolls a film 7 that is rolled up in the form of a roll, intermittently feeds this film in the direction of length by means of feed rollers 8 and a plurality of guide rollers 9, etc., folds the film double by means of a molding plate 11, an insertion plate 12 and the guide rollers 9a through 9c, seals the corresponding positions on the lower edges and side edges of the bags by means of hot plates 13, cools these positions by means of cooling plates 14, cuts away the corresponding upper and lower left and right corner positions of the bags by means of a corner cutter 15, and then cuts the corresponding side edge positions of the bags by means of a separating cutter 16, thus manufacturing individually separated bags W.

The bag-making apparatus 2 has a known structure (see, for example, the above-described Japanese Patent Application Laid-Open (Kokai) No. 2002-36392).

The stocker apparatus 3 is installed next to the bag-making apparatus 2. The stocker apparatus 3 is comprised of a first belt conveyor 17, a second belt conveyor 18 and a stocker 19, etc. The bags W that are successively fed out from the bag-making apparatus 2 are stacked and stocked on the first belt conveyor 17; and when a predetermined number of bags have been stocked, this group of bags Ws (or bags Ws in group) is fed out to the second belt conveyor 18. The second belt conveyor 18 successively feeds out such groups of bags Ws (or bags Ws in groups) onto the first-stage stocking sections 21a and 22a of the stocking sections 21 and 22 that form a pair on the left and right of the stocker 19. If defective bags should be fed out from the bag-making apparatus 2, these defective bags are not placed on the first belt conveyor 17 and are excluded as shown by arrow a.

In the stocker 19, the left and right stocking sections 21 and 22 are formed in six stages in the vertical direction, and these stocking sections can be raised and lowered simultaneously one stage at a time by raising-and-lowering means that is not shown in the drawings. However, during normal operation of the packaging apparatus 2, the stocking sections 21 and 22 are not raised or lowered. The second belt conveyor 18 can move to the left and right as indicated by arrows b; and each time that a predetermined number of bags W, i.e., a group of bags Ws has been stacked on the first belt conveyor 17, this group of bags Ws is alternately fed out onto the stocking section 21a or 22a, and feeding means, which is not shown in the drawings, supply this group of bags Ws to the subsequent bag-supplying apparatus 4 as indicated by arrow c.

The bag-supplying apparatus 4 is an apparatus in which a pair of known conveyor magazine type supply devices (see, for example, Japanese Patent Application Laid-Open (Kokai) No. 8-337217) are installed side by side on the left and right in positions corresponding to the stocking sections 21 and 22. Bags W which have been conveyed forward on respective conveyors 23 and 24 and positioned on the end portions of these conveyors are first vacuum-chucked and lifted by suction disks 25; then, the bag mouths are gripped by gripping members 26, and the bags are supplied to the grippers 27 of the packaging apparatus 5.

The packaging apparatus 5 is a known intermittently rotating table type packaging apparatus (see, for example, the above-described Japanese Patent Application Laid-Open (Kokai) No. 2002-36392). In this packaging apparatus 5, a supply of bags W is received from the bag-supplying apparatus 4 in a stopping position 1, both edge portions of the bags W are gripped by grippers 27, and a packaging operation is then successively performed on the bags W as the table intermittently rotates.

More specifically, in this packaging operation, printing is performed on the bag surfaces by a printer 28 during movement from the stopping position 1 (see inside the circle shown by imaginary lines in Figure 1) to a stopping position 2, the bag mouths are opened by a suction disk 29 and an air nozzle 31 in a stopping position 3, the bags are filled with solid contents via a hopper 32 in a stopping position 4, the bags are filled with liquid contents via a nozzle 33 in a stopping position 5, gas replacement inside the bags is performed by injecting steam into the bags from a steam nozzle 34 in a stopping position 6, the bag mouths are sealed by means of a first sealing bar 35 in a stopping position 7, the bag mouths are re-sealed by means of a second sealing bar 36 in a stopping position 8, the sealed parts are cooled by a cooling bar 37 in a stopping position 9, and the grippers 27 are opened in a stopping position 10 so that the filled and sealed bags W are dropped onto the discharge conveyor 6.

In the above-described bag-making and packaging machine 1, during normal operation of the packaging apparatus 5, the packaging apparatus 5 and bag-making apparatus 2 are set at the same operating speed, and the timing of the intermediate stocker apparatus 3 and bag-supplying apparatus 4 is also matched with the operation of the packaging apparatus 5 and bag-making apparatus 2. In this case, the stocker apparatus 3 functions as a relay device that stacks the bags W manufactured by the bag-making apparatus 2 to form groups of bags Ws, and it supplies these groups of bags Ws to the bag-supplying apparatus 4. In other words, the groups of bags Ws stacked on the first belt conveyor 17 are conveyed to the second belt conveyor 18 and are then temporarily stacked on the first-stage (or second- or third-stage) stocking sections 21a or 22a; however, these groups of bags are immediately fed out to the bag-supplying apparatus 4.

On the other hand, when the packaging apparatus 5 is stopped, the groups of bags Ws placed on the stocking sections 21a and 22a are not immediately fed out to the bag-supplying apparatus 4. Accordingly, after groups of bags Ws have been stocked in the stocking sections 21a and 22a, the stocking sections 21 and 22 as a whole are raised by one stage, and the next groups of bags Ws that are stacked on the first belt conveyor 17 are successively fed out to the second-stage stocking sections 21b and 22b via the second belt conveyor 18 and are stocked here. A considerable number of bags W can be stocked by repeating this action; accordingly, even if the packaging apparatus 5 is temporarily stopped (temporary stopping that occurs frequently is completed in a relatively short time), there is no need to stop the bag-making apparatus 2.

In the above-described bag-making and packaging machine 1, it is desirable to design so that the bag-making speed of the bag-making apparatus 2 is changeable and to lower the bag-making speed when the packaging apparatus 5 is temporarily stopped. However, in the case of ordinary sealing means, if the bag-making speed is simply lowered, the movement of the hot plates 13 used for sealing is slowed so that the contact time between the hot plates 13 and the film 7 is prolonged; as a result, there is a danger that defective sealing will occur. Accordingly, by way of designing the bag-making apparatus 2 so that its bag-making speed can be changed, it is desirable to use a sealing means 38 in which the contact time between the hot plates 13 and the film 7 can be maintained at a constant value even if the bag-making speed is changed.

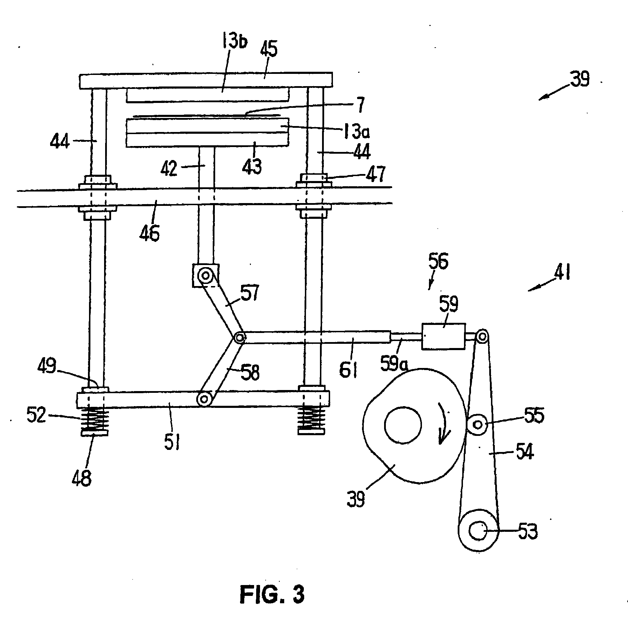

Figure 3 shows an example of such sealing means 38. The sealing means 38 comprises a pair of hot plates 13 (13a and 13b) as well as a cam 39 and a transmission mechanism 41 that form a part of the driving mechanism of the sealing means 38.

In this sealing means 38, the hot plate 13a is disposed on the upper surface of an attachment block 43 which is fastened to the upper end of a fixed shaft 42, and the hot plate 13b is disposed on the undersurface of an attachment block 45 which is fastened to the upper end of a sliding shaft 44. The fixed shaft 42 is fastened to a machine base 46, and the sliding shaft 44 is slidably attached to the machine base 46 via a bearing 47. A spring receiver 48 is formed on the lower end of the sliding shaft 44, and a stopper 49 is formed in a position located a specified distance above this spring receiver 48. A sliding block 51 is slidably installed between the spring receiver 48 and stopper 49, and a compression spring 52 is interposed between the spring receiver 48 and sliding block 51.

The transmission mechanism 41 comprises a swinging lever 54 which is supported in a swingable fashion on a supporting shaft 53 and is driven toward the cam 39 by a spring (not shown in the drawings), a cam roller 55, a transmission rod 56 which is attached to the tip end of the swinging lever 54, a link 57 with one end thereof being connected to the tip end of the transmission rod 56 and another end thereof being connected to the lower end of the fixed shaft 42, and a link 58 with one end thereof being connected to the tip end of the transmission rod 57 and another end thereof being connected to the sliding block 51. The transmission rod 56 is comprised of an air cylinder 59 and a connecting rod 61.

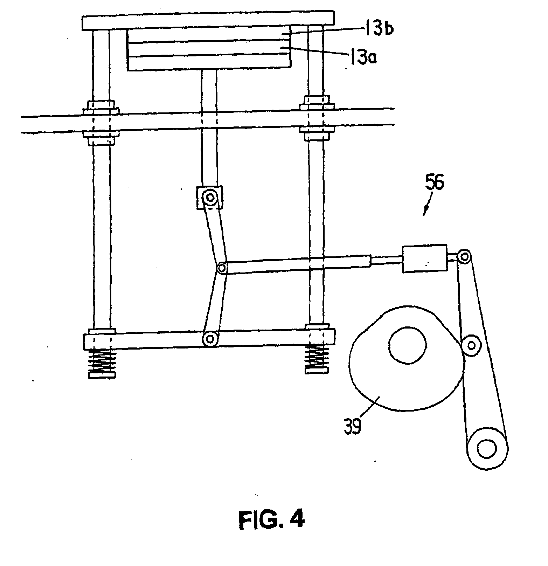

During normal operation of the packaging apparatus 5, the bag-making speed of the bag-making apparatus 2 is high (i.e., the rotational speed of the cam 39 is high), and the cylinder rod 59a of the air cylinder 59 is placed in an extended state in the sealing means 38. Figures 3 through 5 show the movement of the hot plate 13b in this case. As the cam 39 rotates, the transmission rod 56 advances, and the hot plate 13b is lowered from the upper end position (Figure 3) so that this hot plate 13b contacts the fixed hot plate 13a (Figure 4). Afterward, even though the cam 39 rotates further and the transmission rod 56 advances, this merely results in compression of the compression spring 52, and this state is continued until the cam 39 rotates further and the transmission rod is retracted to the position shown in Figure 4.

In this case, where t₁ is the time required for one revolution of the cam 39 and θ₁ is the rotational angle of the cam 39 during the period in which contact between the hot plates 13a and 13b is continued, then the contact time of the hot plates 13a and 13b is t₁ × (θ₁/360). It should be noted that since θ₁ is fixed regardless of the bag-making speed, t₁ is increased when the bag-making speed is merely lowered, so that the contact time is extended.

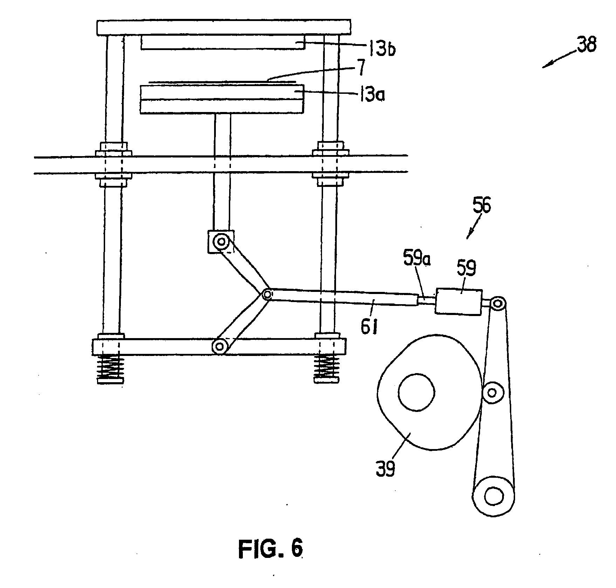

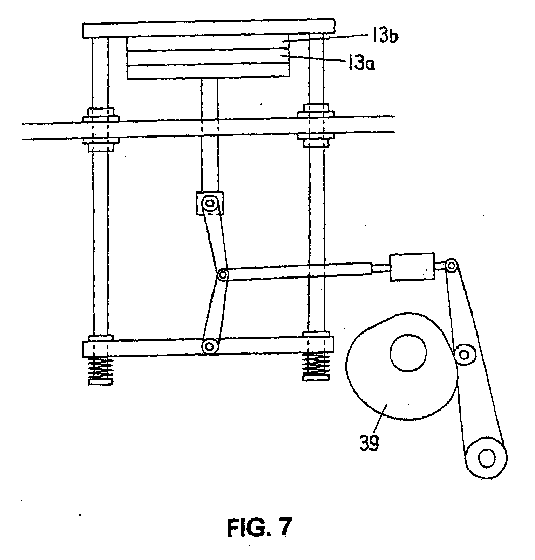

Meanwhile, when the packaging apparatus 5 is temporarily stopped, the bag-making speed of the bag-making apparatus 2 is low (i.e., the rotational speed of the cam 39 is low), and the cylinder rod 59a of the air cylinder 59 is placed in a retracted state in the sealing means 38. Figures 6 through 8 show the movement of the hot plates 13 in this case. As a result of the retraction of the cylinder rod 59a, the connecting rod 61 is retracted from the position shown in Figures 3 through 5, and the hot plate 13b is raised so that the stroke distance is lengthened. Accordingly, the angel through which the cam 39 rotates from the state shown in Figure 6 (upper end position of the hot plate 13b) to the state shown in Figure 7 (position in which the hot plate 13b contacts the hot plate 13a) is increased; in other words, the contact of the hot plate 13b with the hot plate 13a is delayed. As a result, the rotational angle of the cam 39 during the period on which contact between the hot plates 13a and 13b is continued is decreased.

In this case, where t₂ is the time required for one revolution of the cam 39, and θ₂ is the rotational angle of the cam 39 during the period in which contact between the hot plates 13a and 13b is continued, then the contact time of the hot plates 13a and 13b is t₂ × (θ₂/360). Though t₂ > t₁, since θ₂ < θ₁, the contact time can be maintained at a fixed value by selecting conditions which are such that t₁ × θ₁ = t₂ × θ₂.

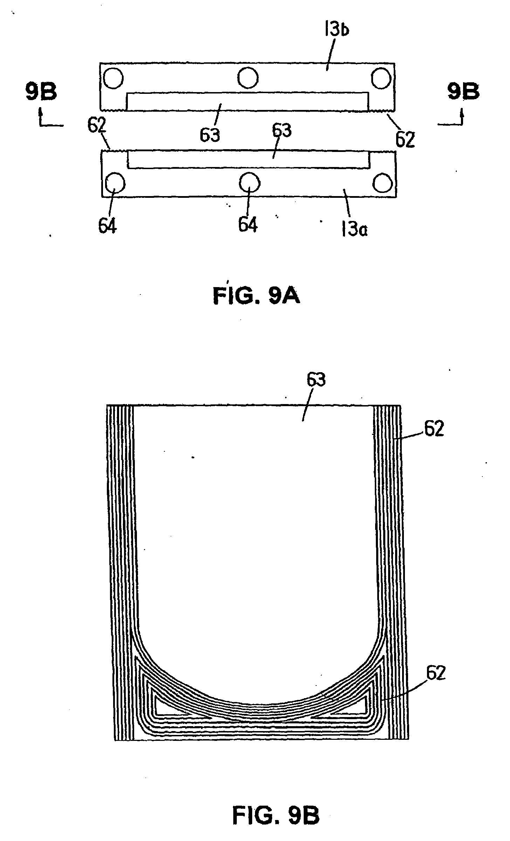

Figures 9A and 9B show one example of the sealing surface shape of the above-described hot plates 13a and 13b.

The sealing surfaces are flat surfaces, and striations 62 are formed in these surfaces. This offers the advantage that when the hot plates 13a and 13b are caused to contact each other, the pressing force is concentrated in the areas of the striations 62 of the sealing surfaces, so that the sealing of the film 7 can be securely accomplished. Accordingly, if such hot plates 13a and 13b that have striations 62 formed in the sealing surfaces are used, sealing performed in two passes in conventional methods can be accomplished in a single pass.

In Figures 9A and 9B, the reference numeral 63 refers to the recessed parts (non-sealing parts) of the sealing surfaces, and 64 to heater attachment holes.

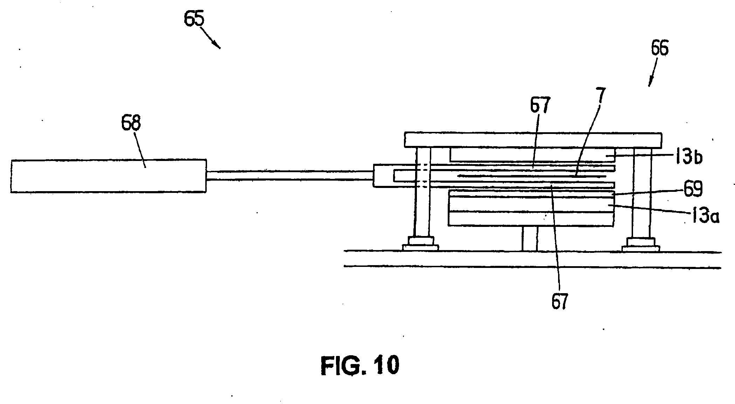

Figure 10 shows an example of a heat insulating apparatus which is disposed in the vicinity of the sealing means of the above-described bag-making apparatus 2. The heat insulating apparatus 65 prevents melting or softening of the film.

More specifically, this heat insulating apparatus 65 is disposed in the vicinity of the sealing means 66 (elements that are substantially the same as in the sealing means 38 are referred to by the same reference numbers). The this heat insulating apparatus 65 comprises a pair of heat insulating plates 67, which have a gap that allows the film 7 to be accommodated between the plates, and driving means 68, which causes the heat insulating plates 67 to advance and retract between an advanced position (the position shown in Figure 9A) between the hot plates 13a and 13b and a retracted position in which the heat insulating plates 67 are away from the hot plates 13a and 13b. The heat insulating apparatus 65 is actuated at the same time that the bag-making apparatus 2 is stopped (the sealing means 66 stop with the hot plates 13a and 13b in an open state) in cases where the stopping time of the packaging apparatus 5 is long so that it is necessary to stop the bag-making apparatus 2.

In Figure 10, the reference numeral 69 refers to a silicone rubber plate that is attached to the surface of the hot plate 13a. The silicone rubber plate 69 improves the surface contact between the film 7 and the hot plates 13a and 13b.

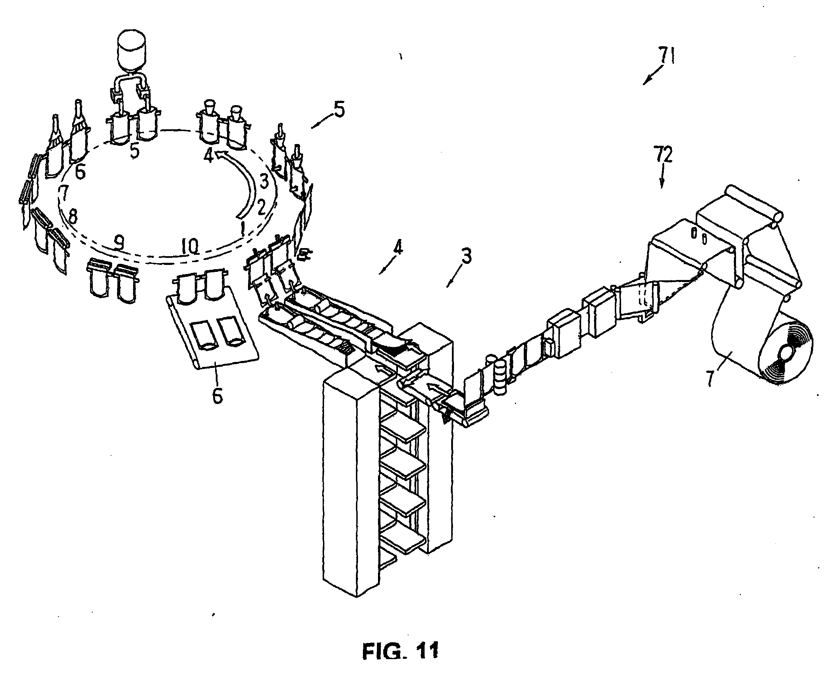

Figure 11 shows a bag-making and packaging machine 71 of another configuration (elements that are substantially the same as in the bag-making and packaging machine 1 are referred to by the same reference numbers). The bag-making and packaging machine 71 includes a bag-making apparatus 72, and this bag-making apparatus 72 differs from the bag-making apparatus 2 in that the film 7 is folded double in the longitudinal direction. In all other respects, including the stocker apparatus 3, the bag-making apparatus 72 is the same as the bag-making and packaging machine 1, and a detailed description thereof is omitted.

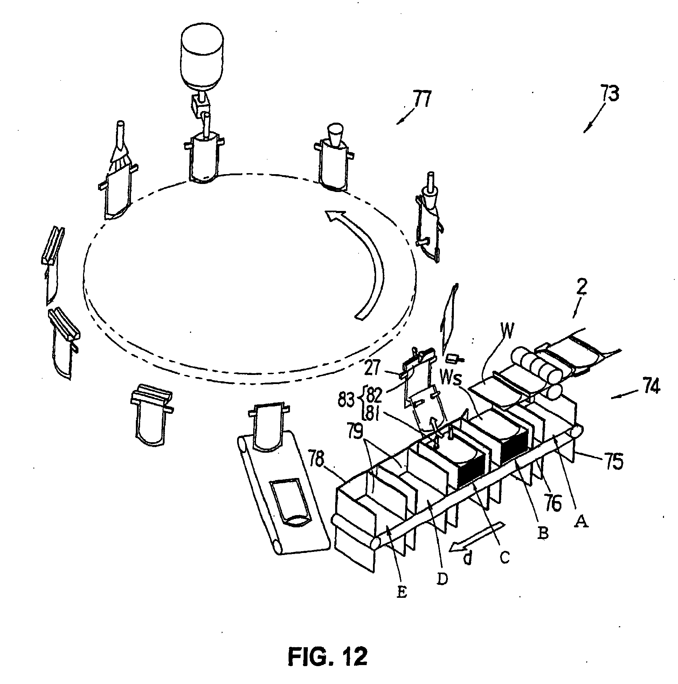

Figure 12 shows a bag-making and packaging machine 73 of still another configuration (elements that are substantially the same as in the bag-making and packaging machine 1 are referred to by the same reference numbers).

In this bag-making and packaging machine 73, the stocker apparatus 74 is comprised of a belt conveyor 76, on which partitioning plates 75 that stand perpendicular to the belt surface are disposed at equal intervals, and a frame member 78, which is disposed on one side surface of the belt conveyor (i.e., on the side of the packaging apparatus 77). The areas located between two partitioning plates 75 constitute stocking sections 79. The belt conveyor 76 is rotated intermittently, and the stocking sections 79 ordinarily advance in the direction of arrow d one pitch (installation interval of the stocking sections 79) at a time and then stop.

In position B, each stocking section 79 is positioned at the tip end portion of the bag-making apparatus 2, and bags W that are successively fed out from the bag-making apparatus 2 are stacked on the stocking section 79. When a predetermined number of bags have been stacked, the belt conveyor 76 is rotated, and the stocking section 79 in position B reaches position C. A bag-supplying apparatus 83, whose chief constituent elements are a suction disk 81 and a gripping member 82, is located in position C where the stocking section 79 accommodating a group of bags Ws stops. The uppermost bag W of the group of bags Ws is suction-chucked and lifted by the suction disk 81; then, the mouth of the bag is gripped by the gripping member 82, and the bag W is supplied to the gripper 27 of the packaging apparatus 77. The stocker apparatus 74 has five stocking sections 79. As described above, bags W are received and a predetermined number of bags are stacked in each stocking section 79 in position B; then, each stocking section 79 advances to position C, and the stacked group of bags Ws is supplied to the bag-supplying apparatus 83.

The packaging apparatus 77 differs from the packaging apparatus 5 only in an aspect that this packaging apparatus 77 is not a two-unit type packaging apparatus. The packaging operation that is performed in the respective stopping positions is the same as that of the packaging apparatus 5. Accordingly, a detailed description thereof is omitted.

In the above-described bag-making and packaging machine 73, during normal operation of the packaging apparatus 77, the packaging apparatus 77 and bag-making apparatus 2 are set at the same operating speed, and the timing of the operation of the intermediate stocker apparatus 74 and bag-supplying apparatus 83 is also matched with the timing of the operation of the packaging apparatus 77 and bag-making apparatus 2. In this case, the stocker apparatus 74 functions as a relay apparatus which stacks bags W to form groups of bags Ws and supplies these groups of bags Ws to the bag-supplying apparatus 83. In other words, when bags W are stacked in each stocking section 79 in position B and are thus stocked as groups of bags Ws, the group of bags Ws on the stocking section 79 in position C is just consumed. Then, the belt conveyor 76 is rotated, and the stocking section 79 accommodating a group of bags Ws in position B are advanced by one pitch, so that the stocking section 79 stops in position C and supplies bags to the bag-supplying apparatus 83. Then, bags W are newly stacked in the stocking section 79 stopped in position B, and this process is repeated.

Meanwhile, when the packaging apparatus 77 is stopped, bags W are not fed out to the packaging apparatus 77 from the stocking section 79 in position C. Consequently, the group of bags Ws on the stocking section 79 in position C is not consumed. Thus, when a predetermined number of bags W are next stacked on the stocking section 79 in position B, and the belt conveyor 76 rotates, then groups of bags Ws are stocked on the stocking sections 79 in positions C and D, and a group of bags Ws is further stacked on the stocking section 79 in position B. By repeating this process, it is possible to stock a considerable number of bags W in the stocking apparatus 74. Accordingly, even if the packaging apparatus 77 is temporarily stopped, there is no need to stop the bag-making apparatus 2.

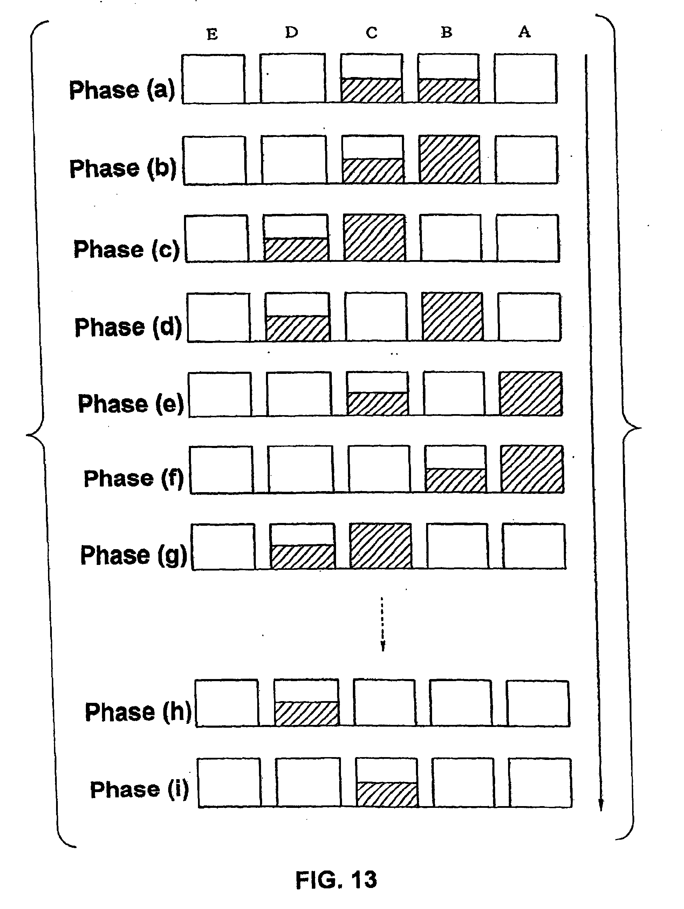

Next, an example of the operation of the stocker apparatus 74 that takes place when the packaging apparatus 77 is temporarily stopped (including the restarting of the packaging apparatus 77) will be described with reference to Figure 13 that shows phase (a) through phase (i).
In phase (a), it is assumed that the packaging apparatus 77 is stopped when the group of bags Ws on the stocking section in position C has been reduced by half, and the group of bags Ws on the stocking section in position B has been stacked half-way.
In phase (b), a predetermined number of bags are stacked so that a group of bags Ws is stocked on the stocking section in position B.
In phase (c), the belt conveyor 76 is rotated, so that each stocking section advances by one pitch. Here, it is assumed that the packaging apparatus 77 is restarted.
In phase (d), the stack of bags Ws on the stocking section in position C is emptied, and a group of bags Ws is stacked on the stocking section in position B.
In phase (e), the belt conveyor 76 is rotated in the reverse direction, and each stocking section is retracted by one pitch.
In phase (f), the group of bags Ws on the stocking section in position C is emptied, and a group of bags Ws is stacked half-way on the stocking section in position B.
In phase (g), the belt conveyor 76 is rotated, and each stocking section advances by two pitches; and this results in the state shown in phase (c); subsequently, actions of phase (d) through phase (g) are repeated.
In phase (h), the bag-making apparatus 2 stops the manufacture of bags. Consequently, bags W are not stacked on the stocking section in position B. Meanwhile, since the packaging apparatus 77 has been restarted, the group of bags Ws on the stocking section in position C is emptied.
In phase (i), the belt conveyor 76 is rotated in the reverse direction, so that each stocking section retracts by one pitch. When the group of bags Ws on the stocking section that has reached position C is emptied, the packaging apparatus 77 is stopped, and the operation of the bag-making and packaging machine 73 as a whole is stopped.

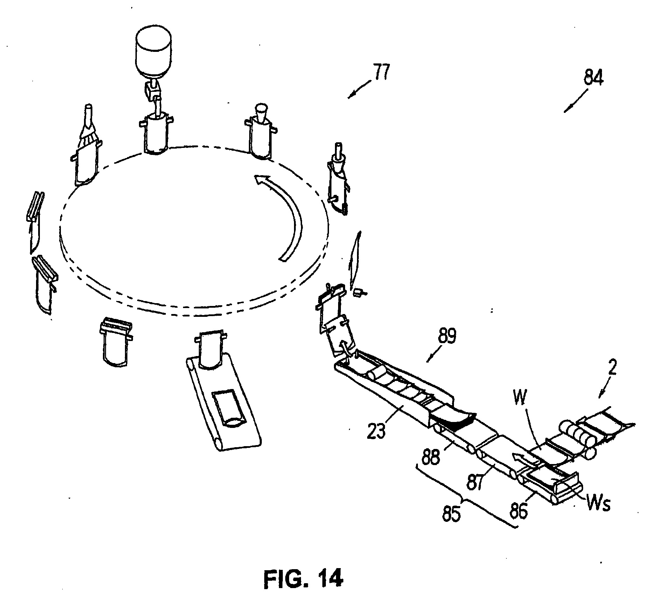

A bag-making and packaging machine 84 of still another configuration is shown in Figure 14 (elements that are substantially the same as in the bag-making and packaging machine 73 are referred to by the same reference numbers).

In this bag-making and packaging machine 84, the stocker apparatus 85 is comprised of three belt conveyors 86 through 88 which are installed in series, and each of these belt conveyors 86 through 88 constitutes a stocking section. The bag-supplying apparatus 89 is the same as one of the conveyor magazine type bag-supplying apparatuses 1 of the bag-supplying apparatus 4 of the bag-making and packaging machine 1.

In the above-described bag-making and packaging machine 84, during normal operation of the packaging apparatus 77, the packaging apparatus 77 and bag-making apparatus 2 are set at the same operating speed, and the timing of the operation of the intermediate stocker apparatus 85 and bag-supplying apparatus 89 is also matched with the timing of the operation of the packaging apparatus 77 and bag-making apparatus 2. In this case, the stocker 85 functions as a relay apparatus which stacks bags W to form groups of bags Ws, and it supplies these groups of bags Ws to the bag-supplying apparatus 89. More specifically, when a predetermined number of bags W have been stacked on the belt conveyor 86, this groups of bags Ws is immediately fed onto the belt conveyors 87 and 88, then onto the conveyor 23 of the bag-supplying apparatus 89.

On the other hand, when the packaging apparatus 77 is stopped, the group of bags Ws that is next stacked on the belt conveyor 86 is not fed out to the bag-supplying apparatus 89. Accordingly, for example, this group of bags Ws is fed onto the belt conveyor 88 and is stocked here. Then, the group of bags Ws that is next stacked on the belt conveyor 86 is fed onto the belt conveyor 87 and is stocked here. Thus, since a considerable number of bags can be stocked on the belt conveyors 86 through 88, there is no need to stop the bag-making apparatus 2 immediately even if the packaging apparatus 77 is stopped.

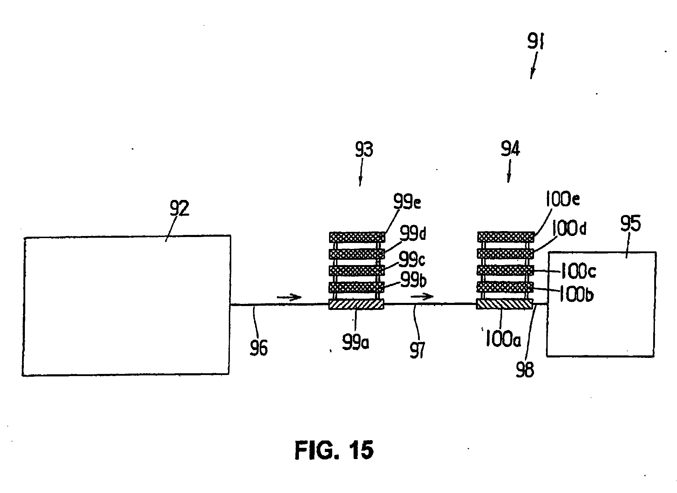

In the bag-making and packaging machine 91 shown in Figure 15, the present invention is applied to bags equipped with spouts.

This bag-making and packaging machine 91 comprises a bag-making apparatus 92 that manufactures bags equipped with spouts, a first stocker apparatus 93, a second stocker apparatus 94, a packaging apparatus 95 which performs a packaging operation that includes filling the bag with contents, capping, etc. while moving the bags equipped with spouts, and first through third guide rails 96 through 98 which are disposed between the respective apparatuses and with which the flanges of the respective spouts are engaged. Furthermore, each of the guide rails 96 through 98 is comprised of a pair of rails that are installed with a gap in between that allows entry of the shaft portions (not shown) of the spouts (not shown) therein. These guide rails are the same as the conveying troughs or conveying paths described in the above-described Japanese Patent Application Laid-Open (Kokai) No. 11-124213 and Japanese Patent Application Laid-Open (Kokai) No. 2001-48342.

The first stocker apparatus 93 has a plurality of relay rails 99a through 99e. Each of these rails comprises a pair of rails which are disposed with a gap in between so that the shaft portions of the spouts of the bags equipped with spouts are entered therein and with which the flanges of the spouts are engaged. The respective relay rails 99a through 99e are basically the same as the relay troughs described in the above-described Japanese Patent Application Laid-Open (Kokai) No. 11-124213, and each pair of rails can stock a predetermined number of bags equipped with spouts.

Furthermore, the relay rails are installed parallel to each other at equal intervals and can be moved simultaneously by one pitch at a time (the spacing between the relay rails) within a horizontal plane in the lateral direction that is perpendicular to the direction of the length of the rails by moving means that is not shown in the drawings. Furthermore, the position relationship between the respective relay rails 99a through 99e and the first guide rails 96 and second guide rails 97 is set so that when one end of one pair of the relay rails 99a through 99e is located in a position to be connected to the first guide rails 96, then another end of such one pair of relay rails is located in a position to be connected to the second guide rails 97. The second stocker apparatus 94 has exactly the same structure as the first stocker apparatus 93 (however, the relay rails are designated by the reference numerals 100a through 100e).

In this bag-making and packaging machine 91, the first stocker apparatus 93 has a role that it is operated when the packaging apparatus 95 is temporarily stopped, and the second stocker apparatus 94 has a role that it is operated when the bag-making apparatus 92 is temporarily stopped. Accordingly, the relay rails 99b through 99e of the first stocker apparatus 93 are at least initially empty; however, the respective predetermined numbers of bags equipped with spouts are stocked beforehand in the relay rails 100b through 100e of the second stocker apparatus 94.

In the above-described bag-making and packaging machine 91, during normal operation of the bag-making apparatus 92 and packaging apparatus 95, both of these apparatuses are set so as to run at the same operating speed. The bags equipped with spouts that are manufactured by the bag-making apparatus 92 are fed out in a single row to the first guide rails 96. These bags pass through the relay rails 99a of the first stocker apparatus 93, the second guide rails 97, and the relay rails 100a of the second stocker apparatus 94, and enter the packaging apparatus 95 via the third guide rails 98, so that the bags are subjected to a specific packaging operation in the packaging apparatus 95. In this case, the first and second stockers 93 and 94 function as relay devices between the bag-making apparatus 92 and packaging apparatus 95.

On the other hand, when the packaging apparatus 95 is temporarily stopped, the first stocker apparatus 93 stops feeding out of the bags equipped with spouts (the second stocker apparatus 94 also stops); and when a predetermined number of bags equipped with spouts have been stocked in the relay rails 99a, the relay rails 99a through 99e are moved by one pitch, so that the relay rails 99b are connected to the first guide rails 96 at one end thereof (these relay rails 99b are also connected to the second guide rails 97 at another end thereof). Then, bags are stoked in the relay rails 99b. When a predetermined number of bags equipped with spouts have been stocked in the relay rails 99b, the relay rails 99a through 99e are again moved by one pitch. By repeating this operation, a considerable number of bags equipped with spouts can be stocked in the first stocker apparatus 93; accordingly, there is no need to stop the bag-making apparatus 92 even if the packaging apparatus 95 is temporarily stopped. When the packaging apparatus 95 is restarted, then the bags equipped with spouts can be fed out from the relay rails that are connected to the first and second guide rails 96 and 97 at this time.

Furthermore, if bags equipped with spouts are stocked in the relay rails 99a through 99e of the first stocker apparatus 93 when the bag-making apparatus 92 is stopped or temporarily stopped, these bags may first be successively fed out to the second guide rails 97. In cases where there is no stock in the first stocker apparatus 93, and the bags equipped with spouts inside the relay rails 100a in the second stocker apparatus 94 have been emptied, then the relay rails 100a through 100e are moved by one pitch in the lateral direction that is perpendicular to the direction of the length of the rails by moving means that is not shown in the drawings, so that the relay rails 100b are connected one end thereof to the third guide rails 98 (these relay rails 100b are also connected at another end thereof to the second guide rails 97); then, the bags equipped with spouts that are stoked in the relay rails 100b are fed out to the third guide rails 98. When the bags equipped with spouts inside the relay rails 100b have been emptied, the relay rails 100a through 100e are further moved by one pitch. By repeating this operation, there is no need to stop the packaging apparatus 95 even if the bag-making apparatus 92 is temporarily stopped.

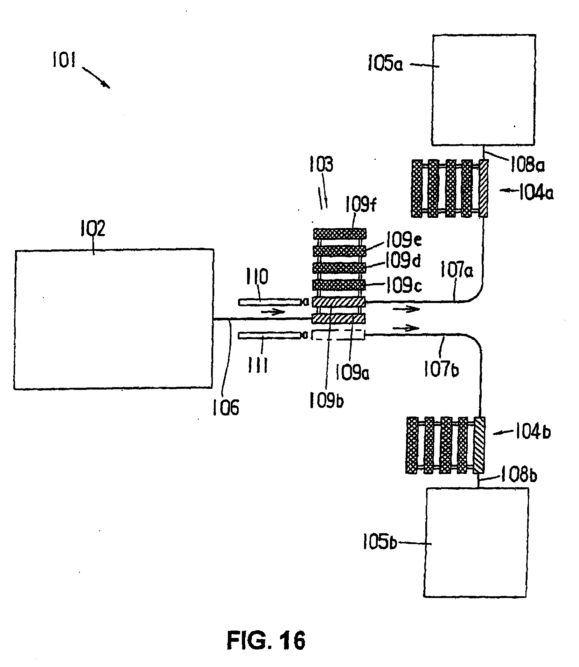

Figure 16 shows the bag-making and packaging machine 101 in which the present invention is likewise applied to bags equipped with spouts.

This bag-making and packaging machine 101, however, differs from the above-described bag-making and packaging machine 91 shown in Figure 15 in that the downstream side of the bag-making apparatus 102 and first stocker apparatus 103 is divided into two lines, and second stocker apparatuses 104a and 104b and packaging apparatuses 105a and 105b are installed in the respective lines. The bag-making apparatus 102 has a bag-making capacity (bags/minute) that is twice the packaging capacity (bags/minute) of the packaging apparatus 105a or 105b. However, the second stocker apparatuses 104a and 104b and packaging apparatuses 105a and 105b, and the first through third guide rails 106, 107a, 107b, 108a and 108b are substantially the same as those in the above-described bag-making and packaging machine 91 shown in Figure 15. The roles of the first stocker apparatus 103 and second stocker apparatuses 104a and 104b are also basically the same as those in the above-described bag-making and packaging machine 91; however, the first stocker apparatus 103 also has a role of dividing and feeding out the bags equipped with spouts manufactured by the bag-making apparatus 102 to the two lines.

The first stocker apparatus 103 has relay rails 109a through 109f (which are structurally the same as the above-described relay rails 99a through 99e shown in Figure 15). These relay rails are disposed parallel to each other at equal intervals and can be moved one pitch at a time in the direction perpendicular to the direction of the length of the rails within a horizontal plane in the lateral direction that is perpendicular to the direction of the length of the rails by moving means that is not shown in the drawings. Furthermore, the positional relationship of the respective relay rails 109a through 109f, the first guide rail 106 and the second guide rails 107a and 107b is set so that when one pair of the relay rails 109a through 109f is in a position to be connected to the first guide rails 106, one or two pairs of the relay rails that are adjacent to such one pair of relay rails is/are connected to one or both of the second guide rails 107a and 107b.

In the above-described bag-making and packaging machine 101, during normal operation of the bag-making apparatus 102 and packaging apparatuses 105a and 105b, the bag-making apparatus 102 is operated at twice the speed of the packaging apparatus 105a or 105b. The bags equipped with spouts that are manufactured by the bag-making apparatus 102 are fed out in a single row to the first guide rails 106 and are divided into two lines by the first stocker apparatus 103.

More specifically, as seen from Figure 16, while the relay rails 109a are in a position that connects the relay rails 109a to the first guide rails 106 and are receiving bags equipped with spouts from the first guide rails 106, the relay rails 109b are connected to the second guide rails 107a, and a pusher 110 feeds out the predetermined number of bags equipped with spouts that have been stocked in the relay rails 109b to the second guide rails 107a. When a predetermined number of bags equipped with spouts have been stocked in the relay rails 109a, the relay rails 109a trough 109f are moved by one pitch. In this case, the relay rails 109b are placed in a position that connects the relay rails 109b to the first guide rails 106, so that the relay rails 109b receive bags equipped with spouts from the first guide rails 106, and the relay rails 109a are alternately connected to the second guide rails 107b as indicated by the imaginary lines, so that a pusher 111 feeds out the predetermined number of bags equipped with spouts stocked in the relay rails 109a to the second guide rails 107b. This operation is repeated.

Meanwhile, when the packaging apparatus 105 or bag-making apparatus 102 is temporarily stopped, the first stocker apparatus 103 and second stocker apparatus 104 operate in the same manner as in the above-described bag-making and packaging machine 91.

As seen from the above, according to the present invention, in a bag-making and packaging machine which is equipped with a bag-making apparatus that unrolls a film rolled up in the form of a roll and manufactures bags by performing sealing and cutting, etc., while feeding this film in the direction of length and with a packaging apparatus which is installed on the downstream side of this bag-making apparatus, the operation of the bag-making apparatus can be continued even in cases where the operation of the packaging apparatus is temporarily stopped. Thus, the generation of defective bags can be prevented.

Furthermore, in a bag-making and packaging machine which is equipped with a bag-making apparatus that manufactures bags having spouts and feeds these bags out in a single row along upstream side guide rails with which the flanges of the spouts are engaged and with a packaging apparatus that is installed on the downstream side of this bag-making apparatus, the operation of the bag-making apparatus can be continued even in cases where the operation of the packaging apparatus is temporarily stopped. Furthermore, such operation can be performed by means of a simple structure that causes fewer troubles.

## Claims

1. A bag-making apparatus which manufactures bags by unrolling a film that is rolled up in a form of a roll and by performing a bag-making operation, which includes sealing and cutting, while feeding said film in a direction of length of said film, wherein
a bag-making speed of said bag-making apparatus is designed to be changeable; and
said bag-making apparatus includes a sealing means that performs sealing on said film and comprises:
a pair of hot plates, and
a driving mechanism that causes said hot plates to contact with and separate from each other in relative terms via a transmission mechanism at an operating speed that is linked to a bag-making speed of said bag making apparatus; and wherein
said hot plates are caused to contact with and separate from each other in relative terms with a stroke that is adjusted by said transmission mechanism, and a contact time of said hot plates is maintained at a constant value by way of adjusting said stroke when an operating speed of said driving mechanism is changed.

2. The bag-making apparatus according to Claim 1, further comprising a spring mechanism interposed between said transmission mechanism and said hot plates, said spring mechanism absorbing a movement of said transmission mechanism during a period in which said hot plates separate from each other following contact with each other and pushing said hot plates with a predetermined force during said period.

3. A bag-making apparatus which manufactures bags by unrolling a film that is rolled up in a form of a roll and by performing a bag-making operation, which includes sealing and cutting, while feeding said film in a direction of length of said film, wherein
said bag-making apparatus is comprised of a sealing means that performs sealing on said film and includes:
a pair of hot plates, and
a driving mechanism that causes said hot plates to contact with and separate from each other in relative terms via a transmission mechanism at an operating speed that is linked to a bag-making speed of said bag making apparatus; and
said bag-making apparatus is further comprised of a heat insulating device that is disposed near said sealing means and includes:
a pair of heat insulating plates which have a gap that allows accommodation of said film between said heat insulating plates, and
a driving means that causes said heat insulating plates to advance and retract between an advanced position which is between said hot plates and a retracted position that is separated from said advanced position.
